# EUROPEAN PATENT APPLICATION

(11) **EP 4 851 606 A1**
(43) Date of publication of application: **09.12.2026**
(21) Application number: 25751867.0
(22) Date of filing: 04.02.2025
(51) Int. Cl.: G01N 21/03, G01N 21/61, G01N 21/3504, G02B 5/00

(54) **OPTICAL DEVICE, METHOD FOR INSTALLING OPTICAL RESONATOR IN OPTICAL DEVICE, AND OPTICAL RESONATOR**

(30) Priority: 09.02.2024 JP 2024018736
(71) Applicant: National Institute of Advanced Industrial Science and Technology, Chiyoda-ku Tokyo 100-8921 (JP)
(72) Inventor: HASHIGUCHI, Koji, Tsukuba-shi, Ibaraki 305-8560 (JP)
(74) Representative: Watermeyer, Nicholas
(86) International application number: PCT/JP2025/003581
(87) International publication number: WO 2025/169917

(57) **Abstract**

This optical device comprises an optical resonator 13 that uses laser light, can reflect laser light, and is provided with a first mirror 15 and a second mirror 16 disposed at positions facing each other. There is no change in the laser light at a position t2 after emission from the optical resonator 13 between when the optical resonator 13 is arranged in the optical device and when the optical resonator 13 is removed from the optical device.

## Description

### TECHNICAL FIELD

The present invention pertains to an optical device, and particularly pertains to an optical device that includes an optical cavities, a method for installing an optical resonator to an optical cavities, and an optical resonator.

### BACKGROUND ART

Heretofore, various optical devices in which optical cavities are used are known. Examples of such optical devices include a laser oscillator for emitting a laser beam, a gas analysis device that uses an optical cavity to analyze a gas, and the like (for example, refer to Patent Document 1). In such an optical device, the optical cavity has mirrors having high reflectance, repeatedly reflects incident laser light between the mirrors, amplifies light, or increases the length of an optical path.

For laser light to be incident on the optical cavity, it is necessary to align the incident direction of the laser light, the beam shape of the laser light at incidence, and the like with the optical cavity. In addition, the higher the reflectance of a mirror, the less likely light is to be emitted from the optical cavity. Therefore, unless the frequency of laser light is matched at higher accuracy with the resonant frequency of the optical cavity, it will be difficult to view light emitted from the optical cavity. In such an optical cavity, readjustment and restoration in a case where the position thereof has shifted are very difficult. Therefore, in the past, there has been a need to securely fix, in advance, an optical cavity at the position thereof in an optical device.

### Citation List

### Patent Documents

Patent Document 1: US Patent No. 5528040

### DISCLOSURE OF THE INVENTION

### Problems to be Solved by the Invention

In relation to an optical device including such an optical cavity, there have been constant requests for the optical cavity to be able to be attached and detached. For example, there have been requests to reduce the size of a gas analysis device that uses cavity ring-down spectroscopy or the like and is brought to a location where a sample gas to be analyzed is collected. If the optical cavity can be attached and detached, it becomes possible to carry just an optical cavity to a collection location and directly collect the sample gas to the optical cavity instead of bringing the optical device itself to the collection location, and it is possible to reduce the volume of a member that is brought to a collection location. In addition, in an optical device that includes an optical cavity, there have been requests to adjust the optical path in advance, in other words adjust the position or angle of each unit, in a state where the optical cavity is not installed. Accordingly, there have been requests for the optical cavity to be able to be attached and detached.

A problem to be addressed by the present invention is to provide an optical device including an optical cavity that is easily attached to and detached from the optical device, a method for installing an optical cavity to an optical device, and an optical cavity.

### Means for Solving the Problems

The present invention uses solutions such as the following to solve the above problems.

(1) An optical device that uses laser light includes: an optical cavity including a first mirror and a second mirror that can each reflect the laser light and are disposed at positions facing each other, and a beam diameter and a beam spread angle of the laser light at a position after emission from the optical cavity do not change between a case where the optical cavity is disposed in the optical device and a case where the optical cavity has been removed from the optical device.
(2) In the optical device according to (1) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, and a refractive index of a gas that is outside the first mirror and the second mirror be n2, with respect to a distance L0 (mm) and a thickness d0 (mm) indicated in the following Formula 4 and Formula 5, a distance La (mm) that light travels between the first mirror and the second mirror and a thickness da (mm) of the first mirror and the second mirror satisfying $L 0 \times 0.8 \leq La \leq L 0 \times 1.2$ $d 0 \times 0.9 \leq da \leq d 0 \times 1.1 .$
   [Math 1] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4)
   [Math 2] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)
(3) In the optical device according to (1) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
   with respect to a distance L0 (mm) indicated in the following Formula 1, a distance La (mm) that light travels between the first mirror and the second mirror satisfying $L 0 \times 0.8 \leq La \leq L 0 \times 1.2 .$
   [Math 3] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)
(4) In the optical device according to (1) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, a refractive index of a gas that is outside the first mirror and the second mirror be n2, and a distance that light travels between the first mirror and the second mirror be L (mm), with respect to a thickness d0 (mm) indicated in the following Formula 3, a thickness da (mm) of the first mirror and the second mirror satisfying $d 0 \times 0.9 \leq da \leq d 0 \times 1.1 .$
   [Math 4] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)
(5) In the optical device according to any one of (1) through (4), between a state where the optical cavity is disposed in the optical device and a state where the optical cavity has been removed from the optical device, a position of a beam waist of the laser light does not change in a region where the optical cavity is disposed.
(6) The optical device according to any one of (1) through (5), the optical cavity being disposed in a manner that enables the optical cavity to be attached and detached within a hermetically-sealed container capable of transmitting the laser light.
(7) A method for installing, to an optical device that uses laser light, an optical cavity including a first mirror and a second mirror that can each reflect the laser light includes: setting and disposing a distance that light travels between the first mirror and the second mirror such that a beam diameter and a beam spread angle of the laser light at a position after emission from the optical cavity do not change between a case where the optical cavity is disposed in the optical device and a case where the optical cavity has been removed from the optical device.
(8) In the method according to (7) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, and a refractive index of a gas that is outside the first mirror and the second mirror be n2, the optical cavity being installed to the optical device in a state where, with respect to a distance L0 (mm) and a thickness d0 (mm) indicated in the following Formula 4 and Formula 5, a distance La (mm) that light travels between the first mirror and the second mirror and a thickness da (mm) of the first mirror and the second mirror satisfies $L 0 \times 0.8 \leq La \leq L 0 \times 1.2$ $d 0 \times 0.9 \leq da \leq d 0 \times 1.1 .$
   [Math 5] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4)
   [Math 6] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)
(9) In the method according to (7) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
   the optical cavity being installed to the optical device in a state where, with respect to a distance L0 (mm) indicated in the following Formula 1, a distance La (mm) that light travels between the first mirror and the second mirror satisfies $L 0 \times 0.8 \leq La \leq L 0 \times 1.2 .$
   [Math 7] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)
(10) In the method according to (7) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, a refractive index of a gas that is outside the first mirror and the second mirror be n2, and a distance that light travels between the first mirror and the second mirror be L (mm), the optical cavity being installed to the optical device in a state where, with respect to a thickness d0 (mm) indicated in the following Formula 3, a thickness da (mm) of the first mirror and the second mirror satisfies $d 0 \times 0.9 \leq da \leq d 0 \times 1.1 .$
   [Math 8] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)
(11) An optical cavity that can be attached to and detached from an optical device includes: a first mirror and a second mirror that can each reflect laser light and are disposed at positions where reflective surfaces face each other, and in the optical device, a beam diameter and a beam spread angle of the laser light at a position after emission from the optical cavity do not change between a case where the optical cavity is disposed in the optical device and a case where the optical cavity has been removed from the optical device.
(12) In the optical cavity according to (11) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, and a refractive index of a gas that is outside the first mirror and the second mirror be n2, with respect to a distance L0 (mm) and a thickness d0 (mm) indicated in the following Formula 4 and Formula 5, a distance La (mm) that light travels between the first mirror and the second mirror and a thickness da (mm) of the first mirror and the second mirror satisfying $L 0 \times 0.8 \leq La \leq L 0 \times 1.2$ $d 0 \times 0.9 \leq da \leq d 0 \times 1.1 .$
   [Math 9] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4)
   [Math 10] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)
(13) In the optical cavity according to (11) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
   with respect to a distance L0 (mm) indicated in the following Formula 1, a distance La (mm) that light travels between the first mirror and the second mirror satisfying $L 0 \times 0.8 \leq La \leq L 0 \times 1.2 .$
   [Math 11] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)
(14) In the optical cavity according to (11) above, the first mirror and the second mirror have the same shape, each include a base section and a reflective layer, each have a reflective surface that is a concave curved surface, and are disposed such that the reflective surface of the first mirror and the reflective surface of the second mirror face each other and a normal at a center of the reflective surface of each mirror matches the same straight line, and letting a radius of curvature of the reflective surface be R (mm), a refractive index of the base section be n, a refractive index of a gas filled between the first mirror and the second mirror be n1, a refractive index of a gas that is outside the first mirror and the second mirror be n2, and a distance that light travels between the first mirror and the second mirror be L (mm), with respect to a thickness d0 (mm) indicated in the following Formula 3, a thickness da (mm) of the first mirror and the second mirror satisfying $d 0 \times 0.9 \leq da \leq d 0 \times 1.1 .$
   [Math 12] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)

### Effects of the Invention

By virtue of the present invention, it is possible to achieve the effect of being able to provide an optical device including an optical cavity that is easily attached to and detached from the optical device, a method for installing an optical cavity to an optical device, and an optical cavity.

### BRIEF DESCRIPTION OF THE DRAWINGS

FIG. 1 is a view that illustrates a configuration of an optical device 10 according to a first embodiment;
FIG. 2 is a view for describing an optical cavity 13 according to the first embodiment;
FIG. 3 is a view that illustrates change of a beam diameter due to the presence or absence of the optical cavity 13 in the optical device 10 according to the first embodiment;
FIG. 4 is a view that illustrates change of a beam diameter due to the presence or absence of an optical cavity 13B in an optical device 10B according to a comparative example;
FIG. 5 is a graph that illustrates an example of a distribution of a thickness d and a distance L0 that is obtained using Formula 1;
FIG. 6 is a view for giving a description regarding a case in which laser light A does not pass through the center 15c of a first mirror 15 or the center 16c of a second mirror 16;
FIG. 7 is a view for describing an optical cavity 23 according to a second embodiment;
FIG. 8A is a view for describing a method for installing an optical cavity 33 in an optical device, according to a third embodiment;
FIG. 8B is a view for describing the method for installing the optical cavity 33 in an optical device, according to the third embodiment;
FIG. 9A is a view for describing an optical cavity 43 according to a variation;
FIG. 9B is a view for describing an optical cavity 43 according to a variation; and
FIG. 10 is a graph that illustrates an example of a distribution of a distance L and a thickness d0 that is obtained using Formula 3.

### PREFERRED MODE FOR CARRYING OUT THE INVENTION

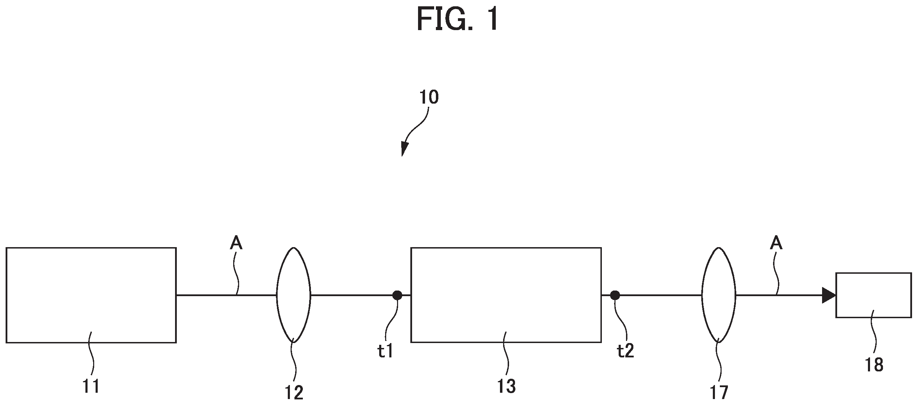

Description is given below regarding embodiments of the present invention with reference to the drawings. Note that each drawing described below, including FIG. 1, is schematically illustrated, and the size and shape of each unit is exaggerated, as appropriate, in order to facilitate understanding. Numbers such as the dimensions of each member, names of materials, and the like that are described in the present specification are examples that correspond to embodiments, are not limited thereto, and may be selected and used, as appropriate. In the present specification, terms that specify shapes or geometric conditions such as "parallel" or "orthogonal", for example, include not only strict meanings but also states that have tolerances at a level that achieves a similar optical function and can be deemed to be parallel or orthogonal.

### (First embodiment)

FIG. 1 is a view that illustrates a configuration of an optical device 10 according to a first embodiment. The configuration of the optical device 10 in FIG. 1 is illustrated in a simplified fashion. The optical device 10 according to the present embodiment is described by taking, as an example, a gas analysis device that uses cavity ring-down spectroscopy or the like to measure the concentration of a prescribed gas. This optical device 10 includes, inter alia, a laser light source 11, a lens 12, an optical cavity 13, a lens 17, and a detector 18. These are connected, as appropriate, by optical fibers or the like that are not illustrated. The optical device 10 according to the present embodiment causes laser light A to be incident in a state where a sample gas to be measured is filled within the optical cavity 13. The laser light A is repeatedly reflected within the optical cavity 13. Some of the laser light A is emitted from the optical cavity 13 and is detected by the detector 18. The optical device 10 measures the situation of the attenuation in the light intensity of the detected laser light A to thereby observe, inter alia, the concentration of a gas that is to be measured from among the sample gas that was filled within the optical cavity 13.

The laser light source 11 oscillates the laser light A and emits the laser light A at a prescribed output power. The laser light A has a wavelength in a wavelength range corresponding to an absorption band of the gas to be measured. For example, in a case where the gas to be measured is water, carbon dioxide, methane, or the like, the wavelength of the laser light A will be within a range of 700-10000 nm that is a wavelength range for near-infrared rays and mid-infrared rays, and the laser light source 11 that outputs the laser light A having such a wavelength is suitably a DFB laser, an external cavity laser, a tunable-wavelength laser, a semiconductor laser, a fiber laser, or the like. Note that the wavelength of the laser light A or the laser light source 11 can be changed, as appropriate, in accordance with the gas to be measured. The wavelength of the laser light A is not limited to the wavelength range for near-infrared rays or mid-infrared rays, and may be set to an ultraviolet wavelength range or a visible-light wavelength range.

The lens 12 has a function for adjusting the beam diameter of the laser light A such that the laser light A is incident on the optical cavity 13 at a prescribed beam diameter.

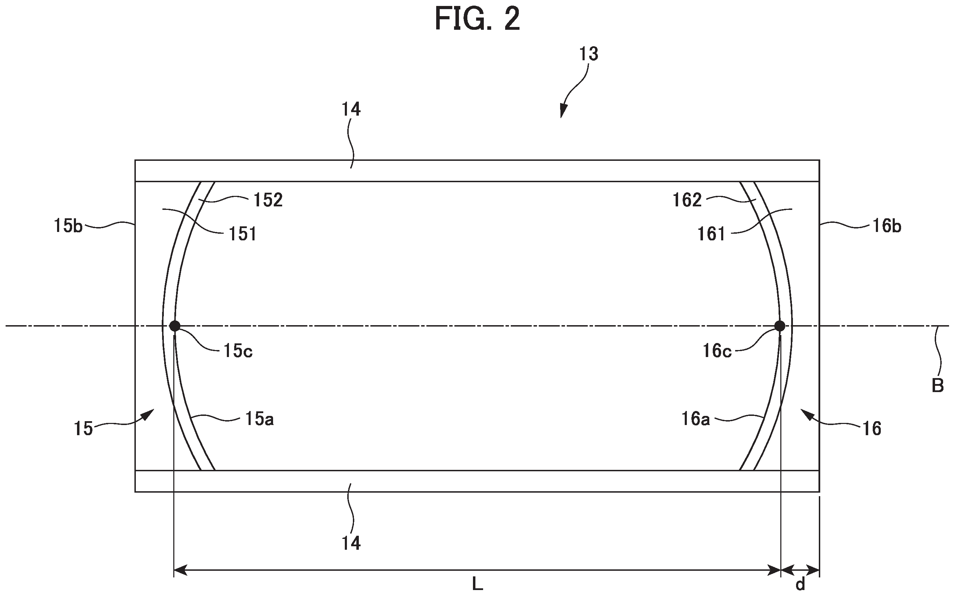

FIG. 2 is a view for describing the optical cavity 13 according to the first embodiment. In the present embodiment, the optical cavity 13 is used as a so-called sample cell. In addition, using, inter alia, a supporter that is not illustrated or the like, the optical cavity 13 is held in a manner that enables the optical cavity 13 to be attached to and detached from the optical device 10 at a prescribed position. A sample gas can be filled inside this optical cavity 13. The optical cavity 13 includes a cylindrical section 14, a first mirror 15, and a second mirror 16. The cylindrical section 14 is hollow. In addition, the first mirror 15 and the second mirror 16 are disposed at both ends of the cylindrical section 14. Furthermore, although not illustrated, an inlet that is an opening through which the sample gas can flow in and an outlet that is an opening through which the sample gas can flow out after being measured are provided in the cylindrical section 14, and these openings can be opened and closed, as appropriate.

Note that, in the present embodiment, description is given for an example in which the sample gas is filled inside the optical cavity 13 and measurement is performed in a sealed state, but there is no limitation thereto. It may be that, for example, an aspect is employed in which the sample gas flows into the optical cavity 13 through the inlet and flows out from the outlet, at a prescribed flow rate during measurement.

The first mirror 15 and the second mirror 16 are provided at both ends of the cylindrical section 14 in the longitudinal direction thereof, and are disposed such that reflective surfaces 15a and 16a face each other. In the present embodiment, description is given by taking an example in which the first mirror 15 and the second mirror 16 have the same shape, and are disposed such that the reflective surfaces 15a and 16a of respective mirrors face each other, and the normals at the centers 15c and 16c of the reflective surfaces 15a and 16a match the same straight line. In addition, in the present embodiment, arrangement is such that the normals at the centers 15c and 16c of the reflective surfaces 15a and 16a match an optical axis B, and the laser light A passes through the centers 15c and 16c of the reflective surfaces 15a and 16a of respective mirrors.

Most light is reflected by a reflective layer 152 of the first mirror 15, and a reflective layer 162 of the second mirror 16. In the present specification and claims, the reflective surfaces 15a and 16a are set as the surfaces of the reflective layers 152 and 162 that will serve as a boundary surface between the reflective layers 152 and 162 of respective mirrors and the sample gas. In addition, the centers 15c and 16c are the most recessed points on the reflective surfaces 15a and 16a, which are concave curved surfaces. In the present embodiment, the first mirror 15 and the second mirror 16 are symmetrically disposed with respect to a plane (not illustrated) that passes through the center of the optical cavity 13 and is orthogonal to the longitudinal direction of the cylindrical section 14.

The first mirror 15 and the second mirror 16 have high reflectances that are 99% or more with respect to the wavelength of the laser light A. In addition, description is given by taking an example in which, for the first mirror 15 and the second mirror 16, the reflective surfaces 15a and 16a are concave curved surfaces and surfaces 15b and 16b on the other sides thereof are planar.

The first mirror 15 and the second mirror 16 have base sections 151 and 161, and the reflective layers 152 and 162. The base sections 151 and 161 are, for example, formed from, inter alia, a glass such as synthetic quartz glass, SiC (silicon carbide), or Si (silicon). The material of the base sections 151 and 161 may be selected, as appropriate, in accordance with, inter alia, the environment in which the first mirror 15 and the second mirror 16 are used.

The reflective layers 152 and 162 are film-like portions that reflect the laser light A. These reflective layers 152 and 162 are formed from a dielectric multilayer film or a metal thin film. The material of a metal thin film for forming the reflective layers 152 and 162, or the material of a high refractive index layer and a low refractive index layer belonging to a dielectric multilayer film for forming the reflective layers 152 and 162 can be selected, as appropriate, in accordance with, inter alia, the wavelength of the laser light A that is reflected by the first mirror 15 and the second mirror 16.

Returning to FIG. 1, the lens 17 condenses the laser light A emitted from the optical cavity 13. When the frequency of the laser light A matches with the resonant frequency of the optical cavity 13, the laser light A is emitted from the optical cavity 13. In addition, in this case, the intensity of the laser light A emitted from the optical cavity 13 strengthens. The detector 18 detects the laser light A emitted from the optical cavity 13. The detector 18 is suitably a photodetector that uses a photodiode or the like, but may use a power meter or the like.

As described above, the optical device 10 is a gas analysis device that uses cavity ring-down spectroscopy or the like to measure the concentration of a prescribed gas. The sample gas to be analyzed is filled within the optical cavity 13, and laser light A outputted from the laser light source 11 is set to a prescribed beam diameter by the lens 12, and caused to be incident on the optical cavity 13. When the optical cavity 13 is disposed at a prescribed position, the laser light A inside the optical cavity 13 is repeatedly reflected by the first mirror 15 and the second mirror 16, and some of the laser light A is emitted from the optical cavity 13. The emitted laser light A is condensed by the lens 17 and irradiated to the detector 18, and the detector 18 detects this. Within the optical cavity 13, the laser light A is absorbed by a gas to be measured that is included in the sample gas. Accordingly, in a case where incidence of the laser light A is stopped, the intensity of the detected laser light A will attenuate over time. The situation of the attenuation of the light intensity changes due to, inter alia, the presence or absence of the gas to be measured, and the type and concentration of the gas. By observing the attenuation of the intensity of the detected laser light A, the optical device 10 measures, inter alia, the concentration of the gas to be measured within the optical cavity 13.

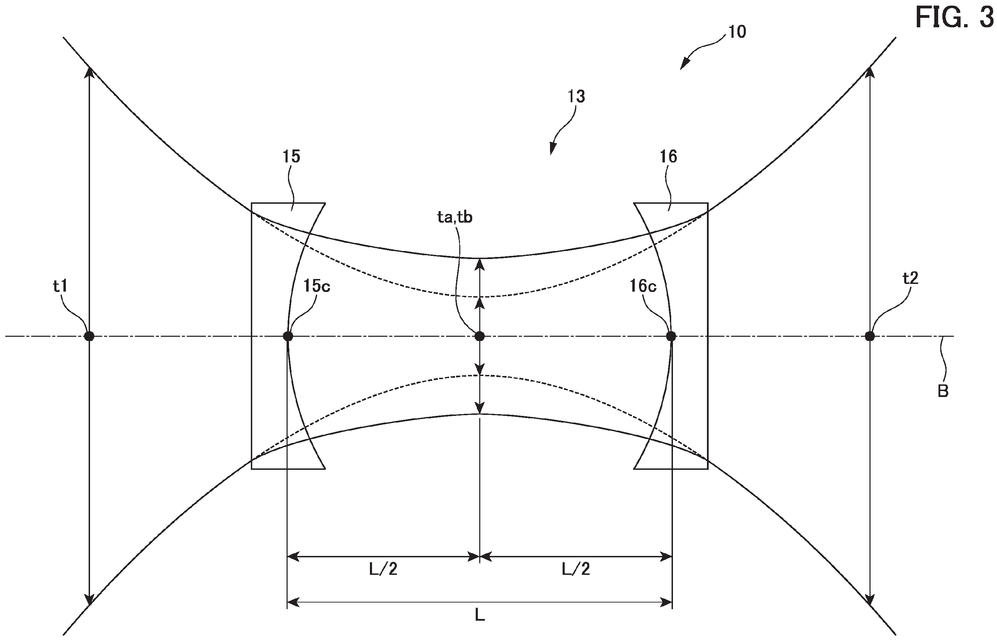

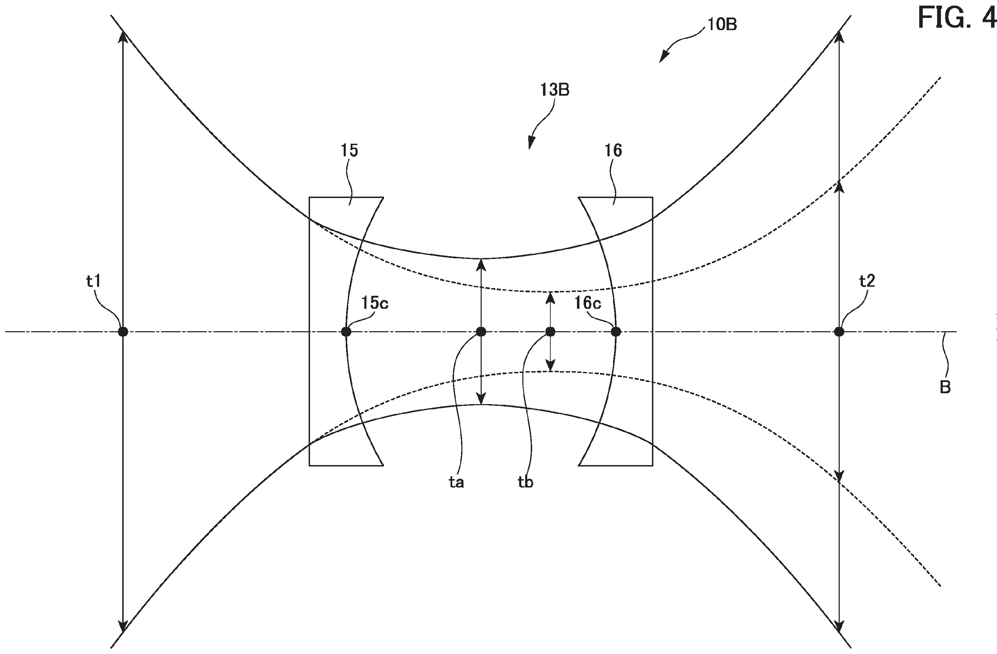

In order to be able to attach and detach the optical cavity 13 according to the present embodiment to and from the optical device 10, it is desirable that the distance between the two mirrors, in other words, the distance L (mm) that light travels between the first mirror 15 and the second mirror 16, satisfies the following Formula 1, in other words that L = L0. This distance L is the distance between points on the reflective surfaces 15a and 16a that the laser light A travels, and is the distance between the centers 15c and 16c in the present embodiment. The inventor found that, by employing an optical cavity 13 that satisfies the following Formula 1, the beam diameter and beam spread angle of the laser light A at a position t2 after being emitted from the optical cavity 13 does not change between a case where the optical cavity 13 is installed and a case where the optical cavity 13 has been removed from the optical device 10. The beam spread angle is the change (spread) of the beam diameter at a given location and, in later-described FIG. 3 and FIG. 4, corresponds to the inclination of a tangent at a given location with respect to a curve indicating the beam diameter.

L0 (mm) indicated in the following Formula 1 is the distance that light travels between the first mirror 15 and the second mirror 16 (corresponds to the distance between the center 15c of the first mirror 15 and the center 16c of the second mirror 16 in FIG. 2 that illustrates the present embodiment), R (mm) is the radius of curvature of the reflective surfaces 15a and 16a, d (mm) is the thickness of the first mirror 15 and the second mirror 16, n1 is the refractive index of the sample gas that is filled within the optical cavity 13, n2 is the refractive index of a gas that is outside the optical cavity 13, and n is the refractive index of the base sections 151 and 161 of the first mirror 15 and the second mirror 16. Note that the thickness d is the thickness at the center 15c of the first mirror 15 and the thickness at the center 16c of the second mirror 16.
[Math 13] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)

In a case where the density of a medium filled between the first mirror 15 and the second mirror 16 and the density of the medium that is outside the first mirror 15 and the second mirror 16 are low, n1 and n2 can both be treated as substantially 1. Therefore, the following Formula 2 can be employed for Formula 1. This condition is established in many cases, such as a case where the media are gases or where the media are substantially vacuum (in other words, a case where a trace amount of material is present in a vacuum to a level that would be deemed to be a vacuum).
[Math 14] $L 0 = R \frac{1}{n + 1} - d \frac{n - 1}{n} \pm \sqrt{{\left(R\frac{1}{n + 1}-d\frac{n - 1}{n}\right)}^{2} - 4 dR \frac{1}{n \left(n+1\right)}}$ (Formula 2)

The optical device 10 according to the present embodiment satisfies the above-described Formula 1, in other words has L = L0. Therefore, the beam diameter and the beam spread angle of the laser light A at the position t2 after emission from the optical cavity 13 do not change between a state in which the optical cavity 13 is installed to the optical device 10 (in other words, a state where the optical cavity 13 is present), and a state where the optical cavity 13 has been removed from the optical device 10 (in other words, a state where the optical cavity 13 is absent).

In addition, the thickness of the first mirror 15 and the second mirror 16 - in other words, the thickness at the centers 15c and 16c of the reflective surfaces 15a and 16a of the first mirror 15 and the second mirror 16 - impacts the spread angle of the beam diameter. In order to be able to attach and detach the optical cavity 13 to and from the optical device 10 without the beam diameter and the beam spread angle of the laser light A at the position t2 after emission from the optical cavity 13 changing between a case in which the optical cavity 13 is installed in the optical device 10 and a case where the optical cavity 13 is removed from the optical device 10, it is also desirable for the thickness d (mm) of the first mirror 15 and the second mirror 16 to satisfy the following Formula 3, in other words, d = d0. The distance L indicated in the following Formula 3 is the distance that light travels between the first mirror 15 and the second mirror 16, R (mm) is the radius of curvature of the reflective surfaces 15a and 16a, n1 is the refractive index of the sample gas filled inside the optical cavity 13, n2 is the refractive index of a gas that is outside the optical cavity 13, and n is the refractive index of the base sections 151 and 161 of the first mirror 15 and the second mirror 16.
[Math 15] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)

The optical device 10 according to the present embodiment satisfies the above-described Formula 3, in other words has d = d0. Therefore, the beam diameter and the beam spread angle of the laser light A at the position t2 after emission from the optical cavity 13 do not change between a state in which the optical cavity 13 is installed to the optical device 10 (in other words, a state where the optical cavity 13 is present), and a state where the optical cavity 13 has been removed from the optical device 10 (in other words, a state where the optical cavity 13 is absent).

In the present embodiment as described above, the distance L and the thickness d satisfy L = L0 and d = d0. Accordingly, due to the above-described Formula 1 and Formula 3, the optical device 10 according to the present embodiment satisfies the following Formula 4 and Formula 5.
[Math 16] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4)
[Math 17] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)

FIG. 3 is a view that illustrates change of the beam diameter due to the presence or absence of the optical cavity 13 in the optical device 10 according to the first embodiment. FIG. 4 is a view that illustrates change of the beam diameter due to the presence or absence of an optical cavity 13B in an optical device 10B according to a comparative example. In FIG. 3 and FIG. 4, simplified illustration is given for only the first mirror 15 and the second mirror 16 in order to facilitate understanding. In addition, in FIG. 3 and FIG. 4, the beam diameter of the laser light A in a state where an optical cavity 13, 13B is installed to the optical device 10 is indicated by a solid line, and the beam diameter in a state where the optical cavity 13, 13B has been removed from the optical device 10 is indicated by a broken line.

The optical cavity 13B according to the comparative example does not satisfy the above-described Formula 1. Accordingly, as illustrated in FIG. 4, in the conventional optical device 10B that serves as a comparative example, even if the beam diameter is the same at a position t1 before incidence on the optical cavity 13B, the beam diameter differs at the position t2 after emission from the optical cavity 13B, between the state where the optical cavity 13B is present and the state where the optical cavity 13B is absent. However, in the optical device 10 according to the present embodiment, the optical cavity 13 satisfies Formula 1. Therefore, between the state in which the optical cavity 13 is absent and the state where the optical cavity 13 is present, the beam diameter at the position t2 matches and does not change, as illustrated in FIG. 3.

Accordingly, in the optical device 10 according to the present embodiment, because the beam diameter of the laser light A at the position t2 after emission from the optical cavity 13 do not change between the presence or absence of the optical cavity 13, it is possible to dispose each unit included in the optical device 10 in a state where the optical cavity 13 is not present, oscillate the laser light A, and, without needing to match the frequency of the laser light A with the resonant frequency, inter alia, adjust the position of the detector 18 in a state that can be viewed. When installing the optical cavity 13 to the optical device 10 after the adjustment, highly accurate readjustment of the laser or the like is unnecessary. Therefore, the optical cavity 13 can be easily installed to the optical device 10. Accordingly, it is easy to attach and detach the optical cavity 13 to and from the optical device 10.

Next, the position of the beam waist will be considered. The beam waist is a portion where the beam diameter becomes smallest. The optical device 10 according to the present embodiment satisfies the above-described Formula 1. The first mirror 15 and the second mirror 16 have the same shape and are disposed such that the reflective surfaces 15a and 16a face each other, and normals of the centers 15c and 16c of the reflective surfaces 15a and 16a match the same straight line. Therefore, when the laser light A, for which the frequency and the like have been adjusted such that resonance occurs within the optical cavity 13, is incident on the optical cavity 13, the position of the beam waist of the laser light A matches along the direction of the optical axis B of the laser light A, regardless of the presence or absence of the optical cavity 13. As illustrated in FIG. 3, the position of the beam waist in a case where the optical cavity 13 according to the present embodiment is present is a position ta, and the position of the beam waist in a state where the optical cavity 13 is absent is a position tb, matching along the optical axis B. In addition, the position ta and the position tb will serve as a midpoint of the distance L through which the laser light A travels between the first mirror 15 and the second mirror 16 (point that will be a distance L/2 between the first mirror 15 and the second mirror 16).

In contrast, the optical device 10B according to the comparative example does not satisfy the above-described Formula 1. Even though the first mirror 15 and the second mirror 16 have the same shape and are disposed such that the reflective surfaces 15a and 16a face each other and normals of the centers 15c and 16c of the reflective surfaces 15a and 16a match the same straight line, when the laser light A, for which the frequency and the like have been adjusted such that resonance occurs within the optical cavity 13B, is incident on the optical cavity 13B, the position of the beam waist of the laser light A differs along the direction of the optical axis B of the laser light A, depending on the presence or absence of the optical cavity 13B. As illustrated in FIG. 4, the position of the beam waist in a case where the optical cavity 13B according to the comparative example is present is a position ta, and the position of the beam waist in a state where the optical cavity 13B is absent is a position tb, differing along the optical axis B.

Accordingly, in the present embodiment, when installing the optical cavity 13 to the optical device 10, by adjusting the position of the optical cavity 13 along the direction of the optical axis B such that the position tb of the beam waist of the laser light A in a case where the optical cavity 13 is absent becomes the same as the position ta of the beam waist in a case where the optical cavity 13 is present, it is possible to realize a state where the beam diameter and the beam spread angle do not change at the position t2 due to the presence or absence of the optical cavity 13. In a case where the optical cavity 13 is absent, it is possible to confirm the position tb of the beam waist in a state that can be viewed without needing to match the frequency of the laser light A with the resonant frequency. Accordingly, it is easy to adjust the position of the laser light A along the direction of the optical axis B when installing the optical cavity 13 to the optical device 10.

Note that, in the present embodiment, in addition to a case in which the distance L that light travels between the first mirror 15 and the second mirror 16 strictly satisfies the above-described Formula 1 (in other words, a case where L = L0), the optical cavity 13 may employ L = La. With respect to the distance L0 that satisfies Formula 1, this distance La satisfies L0 × 0.8 ≤ La ≤ L0 × 1.2. In other words, the distance La satisfies being within a range that is ±20% of the value of the distance L0 obtained in Formula 1. If the distance L in the optical cavity 13 (the distance between the center 15c of the first mirror 15 and the center 16c of the second mirror 16 in the present embodiment) satisfies the above-described range, depending on, inter alia, the intended use of the optical device 10, attachment/detachment to/from the optical device 10 becomes possible, similar to the case where Formula 1 is strictly satisfied. This distance La may be set, as appropriate, in accordance with, inter alia, the usage environment or desired optical performance of the optical device 10 in which the optical cavity 13 is used, within a range that satisfies the above-described range.

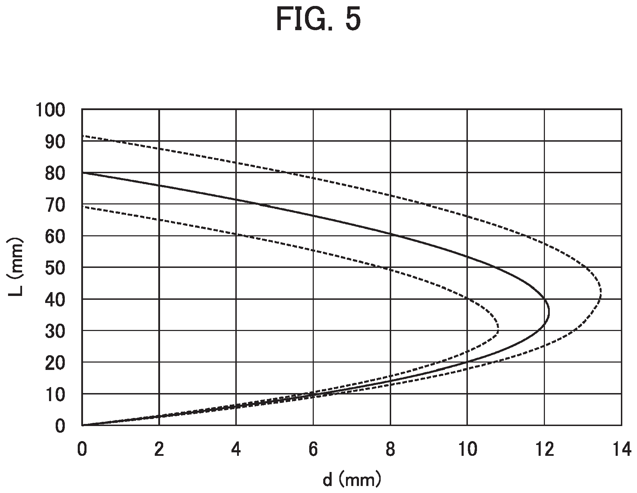

FIG. 5 is a graph that illustrates an example of a distribution of the thickness d and the distance L0 that is obtained using Formula 1. In the graph illustrated in FIG. 5, the vertical axis is the distance L (mm), and the horizontal axis is the thickness d (mm). In addition, a solid line indicates a distribution for the thickness d and the distance L0 in a case where n1 = n2 = 1, R = 100 mm, and n = 1.5 are set in Formula 1, and broken lines indicate a distribution for the thickness d and the distance L0 in a case where n1 = n2 = 1, R = 100 ±10 mm, and n = 1.5 ±0.1 are set in Formula 1. In the graph illustrated in FIG. 5, for a given thickness d, the distance L0 indicated by broken lines is within the range of ±20% of the distance L0 indicated by a solid line, and is within the range of the distance La that is calculated using the distance L0 indicated by the solid line. Accordingly, the optical cavity 13 can be attached to and detached from the optical device 10 if the distance L is within the range of the two curves that are indicated by these broken lines.

In addition, in the present embodiment, for the optical cavity 13, the thickness d of the first mirror 15 and the second mirror 16 may be set to d = da. With respect to the thickness d0 that satisfies Formula 3, this thickness da satisfies d0 × 0.9 ≤ da ≤ d0 × 1.1. In other words, the thickness da satisfies being within a range that is ±10% of the value of the thickness d0 obtained in Formula 3. If the thickness d of the first mirror 15 and the second mirror 16 of the optical cavity 13 satisfy the above-described range, depending on, inter alia, the intended use of the optical device 10, attachment/detachment to/from the optical device 10 becomes possible, similar to the case where Formula 3 is strictly satisfied. This thickness da may be set, as appropriate, in accordance with, inter alia, the usage environment or desired optical performance of the optical device 10 in which the optical cavity 13 is used, within a range that satisfies the above-described range.

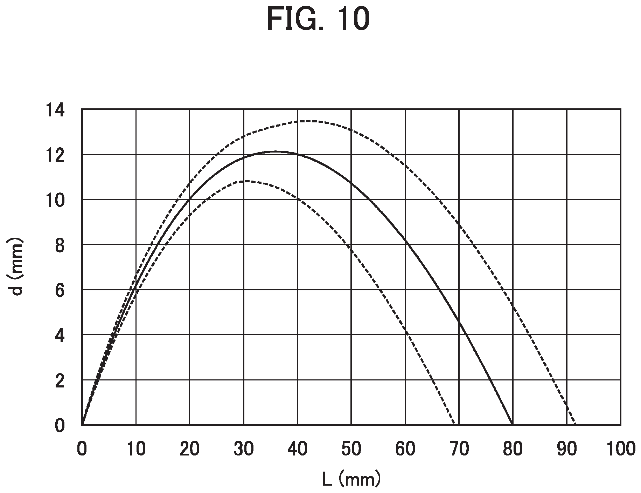

FIG. 10 is a graph that illustrates an example of a distribution of the distance L and the thickness d0 that is obtained using Formula 3. In the graph illustrated in FIG. 10, the vertical axis is the thickness d (mm), and the horizontal axis is the distance L (mm). In addition, a solid line indicates a distribution for the distance L and the thickness d0 in a case where n1 = n2 = 1, R = 100 mm, and n = 1.5 are set in Formula 3, and broken lines indicate a distribution for the distance L and the thickness d0 in a case where n1 = n2 = 1, R = 100 ±10 mm, and n = 1.5 ±0.1 are set in Formula 3. In the graph illustrated in FIG. 10, at a given distance L, the thickness d0 indicated by broken lines is within the range of ±10% of the thickness d0 indicated by the solid line, and is within the range of the thickness da that is calculated using the thickness d0 indicated by the solid line. Accordingly, if the thickness d of each mirror in the optical cavity 13 is within the range of the two curves indicated by these broken lines, the optical cavity 13 can be attached to and detached from the optical device 10.

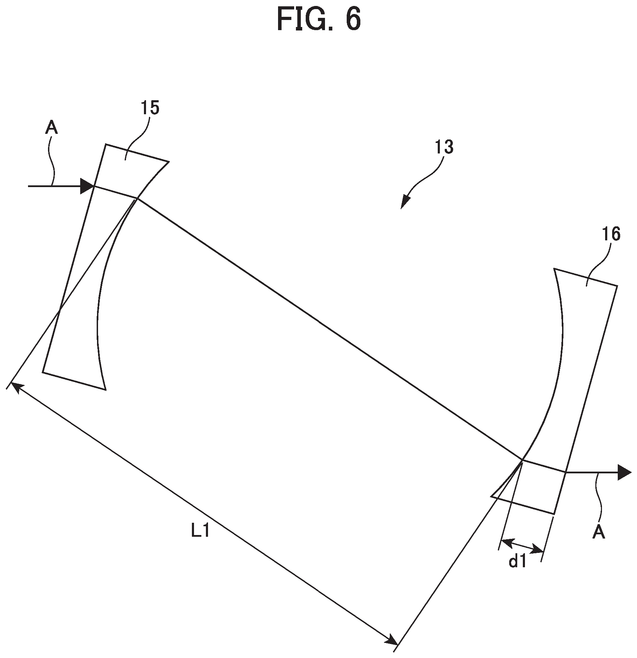

FIG. 6 is a view for giving a description regarding a case in which laser light A does not pass through the center 15c of a first mirror 15 or the center 16c of a second mirror 16. In FIG. 6, in order to facilitate understanding, illustration is given by illustrating only the optical cavity 13 while omitting the cylindrical section 14. FIG. 6 illustrates a state where the laser light A strictly speaking does not pass through the center 15c of the first mirror 15 and the center 16c of the second mirror 16, and is a case in which the optical cavity 13 can be attached to and detached from the optical device 10. In such a case, let L1 be the distance that the laser light A actually travels between first mirror 15 and the second mirror 16, and let the thickness of the first mirror 15 and the second mirror 16 be d1. In this case, when obtaining the distance L0 in Formula 1, it becomes necessary to substitute the thickness d1 for the thickness d. In addition, for whether a condition is satisfied, it is necessary to compare a distance L1 with the distance L0 that is obtained in this manner. Similarly, when obtaining the thickness d0 in Formula 3, it is necessary to substitute the distance L1 for the distance L and, for whether a condition is satisfied, it is necessary to compare the thickness d1 with the obtained thickness d0.

### (Second embodiment)

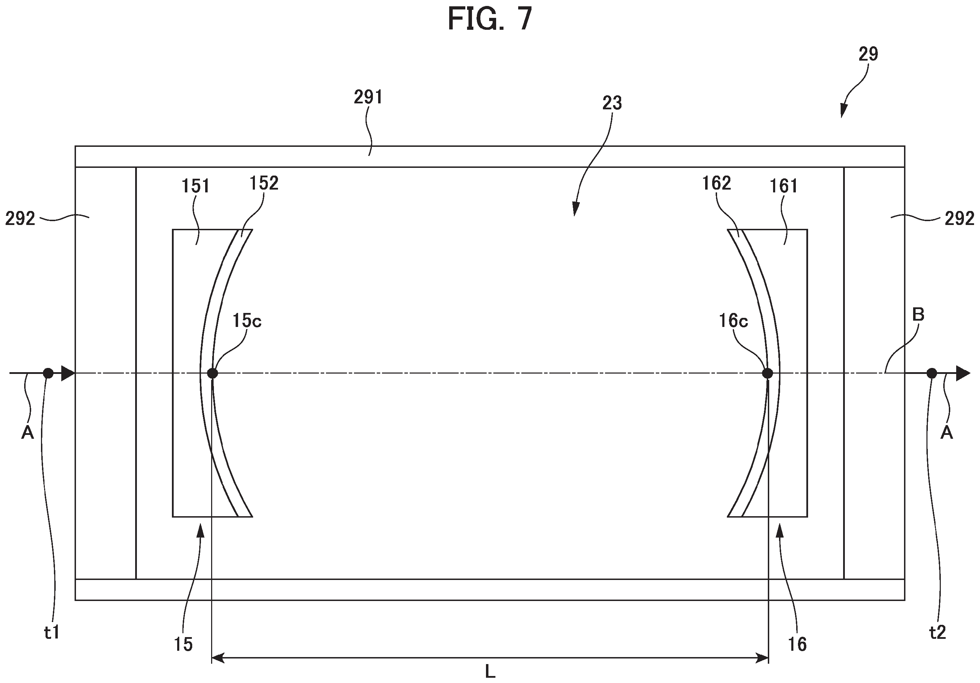

FIG. 7 is a view for describing an optical cavity 23 according to a second embodiment. An optical device according to the second embodiment differs to that according to the previously-described first embodiment in that the optical cavity 23 is disposed inside a sample cell 29 and is not sealed by the cylindrical section 14, but is otherwise the same. Accordingly, the same reference symbols are added to portions fulfilling similar functions to those in the previously-described first embodiment, and duplicate description is omitted, as appropriate.

The optical cavity 23 according to the second embodiment can be applied to the optical device 10 described in the first embodiment. As illustrated in FIG. 7, the optical cavity 23 is disposed within the sample cell 29, without being hermetically sealed by a cylindrical section 14. The sample cell 29 has a hollow cylindrical section 291, and windows 292 that seal off both ends of the cylindrical section 291, with the space therein able to be hermetically sealed.

The cylindrical section 291 is formed from aluminum, stainless steel, Invar, glass, or the like. Each window 292 is provided at a location at which the laser light A is incident on or emitted from, and is formed from, inter alia, glass that is capable of transmitting the laser light A. In addition, the sample cell 29 enables the sample gas to flow in and be discharged, and is provided with an inlet and an outlet (not illustrated) that can be opened and closed. In addition, the sample cell 29 is of a size that enable the first mirror 15 and the second mirror 16 to be attached and detached, and is provided with an opening (not illustrated) that can be opened and closed.

Using a supporter (not illustrated), the optical cavity 23 is secured inside the sample cell 29 along the direction of the optical axis B in a manner that enables the optical cavity 23 to be attached and detached. The optical cavity 23 is secured, using the supporter (not illustrated), at a position where the distance L between centers 15c and 16c of the two mirrors satisfies the conditions of Formula 1 described above. In other words, L = L0. The optical cavity 23 according to the present embodiment can be put into and taken out of the sample cell 29 in a state where the distance L satisfies the conditions of Formula 1 (in other words a state where L = L0 is satisfied). In addition, the thickness d of the two mirrors satisfies the conditions of Formula 3 described above, that is d = d0. Accordingly, the optical cavity 23 and the optical device according to the present embodiment satisfy Formula 4 and Formula 5, which are described above. Note that, in the present embodiment, description is given by giving an example in which the optical cavity 23 can be put into and taken out of the sample cell 29 in a state where the distance L satisfies L = L0, but there is no limitation thereto, and it may be that the optical cavity 23 can be put into and taken out of the sample cell 29 in a state where the distance L satisfies L = La. Similarly, the optical cavity 23 may be set such that the thickness d of the two mirrors satisfies d = da.

In the present embodiment, the sample cell 29 is disposed between the position t1 and the position t2. In an optical device according to the present embodiment, the beam diameter at the position t2 does not change according to the presence or absence of the optical cavity 23. Accordingly, in the present embodiment, it is possible to dispose, in the optical device, the sample cell 29 that is not provided with the optical cavity 23, actually irradiate the laser light A, inter alia, adjust the position of the detector 18 or the like in a state where the laser light A can be visually recognized, and subsequently dispose the optical cavity 23 within the sample cell 29 and use the optical cavity 23. In other words, by virtue of the present embodiment, it is possible to easily adjust, in advance, each member of the optical device with only the sample cell 29, and thus it becomes possible to attach and detach the optical cavity 23. In the present embodiment, it is also possible to use, as the windows 292, a member that affects the optical path of the laser light A, such as a wedge window.

### (Other embodiments)

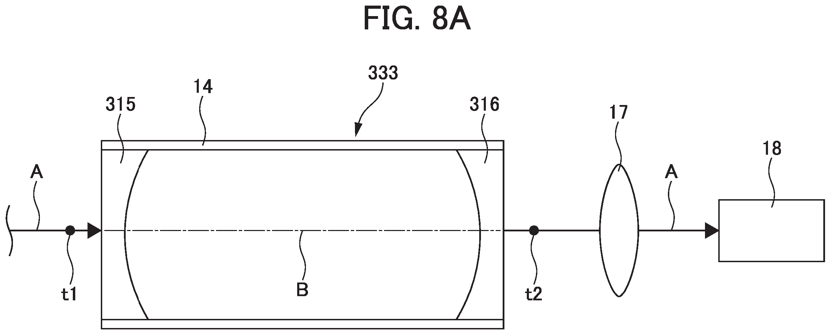

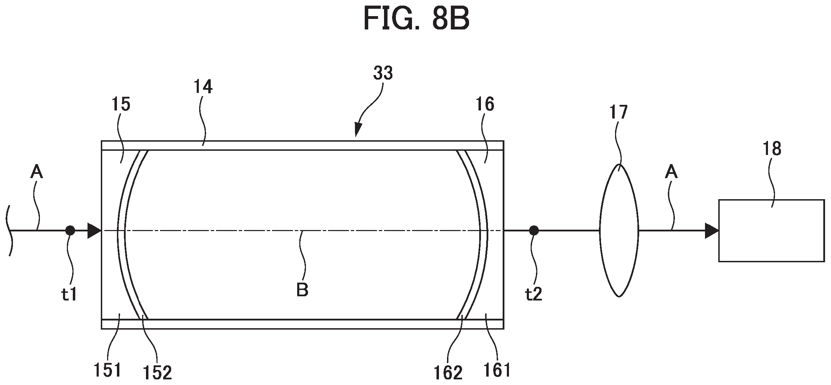

FIG. 8A and FIG. 8B are views for describing a method for installing an optical cavity 33 in an optical device, according to a third embodiment. FIG. 8A illustrates a state in which adjustment of each member of the optical device is being performed using a provisional optical cavity 333, and FIG. 8B illustrates a state in which the provisional optical cavity 333 has been removed and swapped with the optical cavity 33. The optical device according to the third embodiment differs to that according to the previously-described first embodiment in that the position of each unit of the optical device is adjusted using the provisional optical cavity 333, but is otherwise similar to the first embodiment. Accordingly, the same reference symbols are added to portions fulfilling similar functions to those in the previously-described first embodiment, and duplicate description is omitted, as appropriate. The optical cavity 33 according to the third embodiment can be applied to the optical device 10 described in the first embodiment. The optical cavity 33 includes a first mirror 15, and a second mirror 16.

In the optical device according to the third embodiment, firstly the provisional optical cavity 333 is used to adjust each member of the optical device, as illustrated in FIG. 8A. This provisional optical cavity 333 includes a provisional first mirror 315 and a provisional second mirror 316 that are the same shape as the first mirror 15 and the second mirror 16, and the distance between the center of the provisional first mirror 315 and the center of the provisional second mirror 316 (in other words, the distance that light travels between the provisional first mirror 315 and the provisional second mirror 316) is equal to the distance between the center 15c of the first mirror 15 of the optical cavity 33 and the center 16c of the second mirror 16 (in other words, the distance that light travels between the first mirror 15 and the second mirror 16). The provisional first mirror 315 and the provisional second mirror 316 correspond to base sections 151 and 161 that lack the reflective layers 152 and 162 for the first mirror 15 and the second mirror 16.

In the present embodiment, using the provisional optical cavity 333 that includes the provisional first mirror 315 and the provisional second mirror 316, the laser light A is actually emitted, and the position of the detector 18 and the like are adjusted in a state where the laser light A can be visually recognized. Next, as illustrated in FIG. 8B, the provisional optical cavity 333 is removed, and swapped with the optical cavity 33.

In the present embodiment, the beam diameter and the beam spread angle at the position t2 match between a state where the optical cavity 33 is disposed and a state where the provisional optical cavity 333 is disposed. As a result, by virtue of the present embodiment, it is possible to dispose the provisional optical cavity 333 in the optical device 10 and adjust the position of each member in a state where the laser light A can be viewed, and it is possible to enable the optical cavity 33 to be easily attached to and detached from the optical device. In addition, by virtue of the present embodiment, it is possible to improve a degree of freedom in selecting the optical cavity 33 because there is no condition pertaining to the first mirror 15 and the second mirror 16 in the optical cavity 33. It is possible to also select an optical cavity that does not satisfy the previously-described Formula 1, for example, an optical cavity in which the surfaces 15b and 16b that belong to the first mirror 15 and the second mirror 16 and are on the sides opposite the reflective surfaces 15a and 16a are not planes, or the surfaces 15b and 16b are at an angle (wedge) with respect to the optical axis B.

### (Variations)

There is no limitation to the embodiments described above. Various transformations or modifications are possible, and these are also within the scope of the present invention.

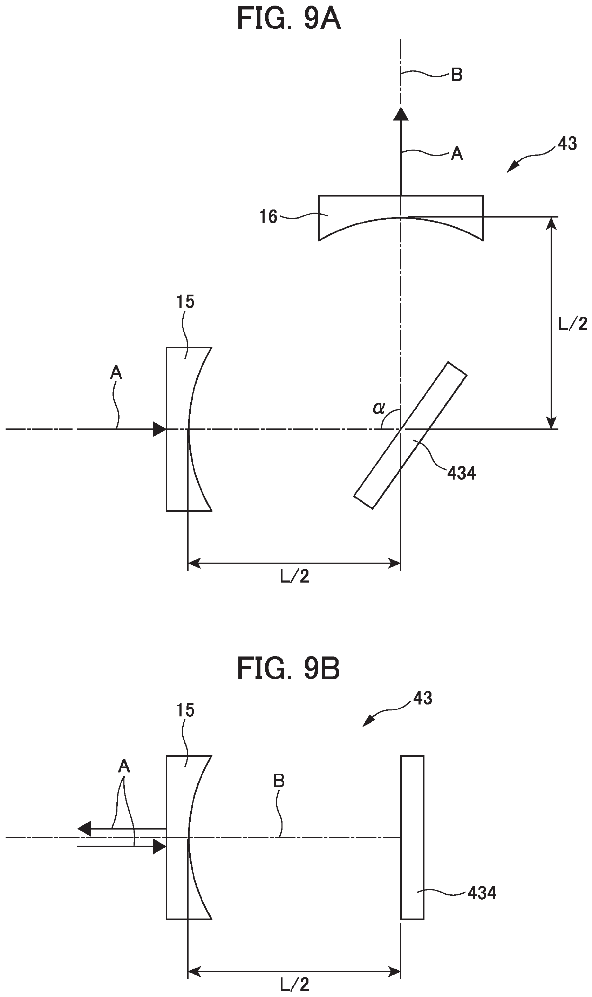

(1) In the first and second embodiments, description was given for an example in which the optical axis of the laser light A between the first mirror 15 and the second mirror 16 is a straight line, but there is no limitation thereto, and the optical axis may bend in a prescribed direction at, inter alia, the position of the beam waist. FIG. 9A and FIG. 9B are views for describing an optical cavity 43 according to a variation. FIG. 9A and FIG. 9B illustrate an example in which the optical axis B of the laser light A forms an angle α with respect to the original direction of the optical axis due to a mirror 434. The optical cavity 43 according to the variation includes the mirror 434 at the position of the beam waist, and the laser light A is reflected at a prescribed direction by this mirror 434. A reflective surface of the mirror 434 is planar, and is capable of reflecting and deflecting the laser light A with high reflectance.

There may be an aspect in which, with the optical cavity 43 according to the variation, the optical axis B of the laser light A is deflected by the mirror 434 to a direction that forms an angle α with respect to the original direction of the optical axis, at a position that becomes the beam waist, as illustrated in FIG. 9A. In this case, the angle α is 0° < α < 180°. In addition, there may be an aspect in which, with the optical cavity 43, the angle α = 0°, laser light is reflected a plurality of times between the first mirror 15 and the mirror 434, then the laser light A is emitted from the first mirror 15, as illustrated in FIG. 9B, or, although not illustrated, there may be an aspect in which the laser light A is emitted from the mirror 434.

(2) In each embodiment, the first mirror 15 and the second mirror 16 are described as having the same shape, but there is no limitation thereto, and the radius of curvature of the concave curved surfaces thereof, and the thickness d of the base sections 151 and 161 may be different. In addition, the base sections 151 and 161 may have different refractive indexes n. Note that, in a case where the first mirror 15 and the second mirror 16 have different shapes, the position of the beam waist can change in accordance with the presence or absence of an optical cavity, but if there is an aspect where the beam diameter and beam spread angle of the laser light A at the position t2 after the laser light A is emitted from the optical cavity do not change due to the presence or absence of the optical cavity, it is possible to dispose each unit included in the optical device 10 in a state where the optical cavity 13 is absent, and it is possible to, inter alia, adjust the position of each unit in a state that can be viewed, without needing to match the frequency of the laser light A with a resonant frequency. When installing the optical cavity 13 to the optical device 10 after the adjustment, highly accurate readjustment of the laser or the like is unnecessary. Therefore, the optical cavity 13 can be easily installed to the optical device 10. Accordingly, attaching and detaching an optical cavity to an optical device can be easily performed, similarly to, inter alia, the previously-described first embodiment.
(3) In each embodiment, description is given by taking an example in which the optical device 10 is a gas analysis device that uses the laser light A, the optical cavities 13 and 33 are used as sample cells, and the optical cavity 23 is disposed inside the sample cell 29, but there is no limitation thereto. For example, an optical device may be, inter alia, a laser oscillator that emits a result of cutting an unnecessary wavelength range (a sideband) from excited laser light. In addition, an optical cavity may be for amplifying excited laser light.

Note that each embodiment and variation can be used in combination, as appropriate, but detailed description thereof is omitted. In addition, the present invention is not limited by the embodiments or the like described above.

### EXPLANATION OF REFERENCE NUMERALS

10 Optical device
11 Laser light source
12 Lens
13, 23, 33 Optical cavity
15 First mirror
16 Second mirror
17 Lens
18 Detector
A Laser light
B Optical axis

## Claims

1. An optical device that uses laser light, the optical device comprising:
an optical cavity including a first mirror and a second mirror that can each reflect the laser light and are disposed at positions facing each other, wherein
a beam diameter and a beam spread angle of the laser light at a position after emission from the optical cavity do not change between a case where the optical cavity is disposed in the optical device and a case where the optical cavity has been removed from the optical device.

2. The optical device according to claim 1, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be n, a refractive index of a gas filled between the first mirror and the second mirror be n1, and a refractive index of a gas that is outside the first mirror and the second mirror be n2,
with respect to a distance LO (mm) and a thickness d0 (mm) indicated in following Formula 4 and Formula 5, a distance La (mm) that light travels between the first mirror and the second mirror and a thickness da (mm) of the first mirror and the second mirror satisfy $L 0 \times 0.8 \leq La \leq L 0 \times 1.2$ $d 0 \times 0.9 \leq da \leq d 0 \times 1.1 .$
[Math 1] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4) [Math 2] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)

3. The optical device according to claim 1, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
with respect to a distance LO (mm) indicated in the following Formula 1, a distance La (mm) that light travels between the first mirror and the second mirror satisfies $L 0 \times 0.8 \leq La \leq L 0 \times 1.2 .$
[Math 3] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)

4. The optical device according to claim 1, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be n, a refractive index of a gas filled between the first mirror and the second mirror be n1, a refractive index of a gas that is outside the first mirror and the second mirror be n2, and a distance that light travels between the first mirror and the second mirror be L (mm), with respect to a thickness d0 (mm) indicated in the following Formula 3, a thickness da (mm) of the first mirror and the second mirror satisfies $d 0 \times 0.9 \leq da \leq d 0 \times 1.1 .$
[Math 4] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)

5. The optical device according to any one of claims 1 to 4, wherein
between a state where the optical cavity is disposed in the optical device and a state where the optical cavity has been removed from the optical device, a position of a beam waist of the laser light does not change in a region where the optical cavity is disposed.

6. The optical device according to claim 1, wherein
the optical cavity is disposed in a manner that enables the optical cavity to be attached and detached within a hermetically-sealed container capable of transmitting the laser light.

7. A method for installing, to an optical device that uses laser light, an optical cavity including a first mirror and a second mirror that can each reflect the laser light, the method comprising:
setting and disposing a distance that light travels between the first mirror and the second mirror such that a beam diameter and a beam spread angle of the laser light at a position after emission from the optical cavity do not change between a case where the optical cavity is disposed in the optical device and a case where the optical cavity has been removed from the optical device.

8. The method according to claim 7, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be n, a refractive index of a gas filled between the first mirror and the second mirror be n1, and a refractive index of a gas that is outside the first mirror and the second mirror be n2,
the optical cavity is installed to the optical device in a state where, with respect to a distance L0 (mm) and a thickness d0 (mm) indicated in following Formula 4 and Formula 5 , a distance La (mm) that light travels between the first mirror and the second mirror and a thickness da (mm) of the first mirror and the second mirror satisfy $L 0 \times 0.8 \leq La \leq L 0 \times 1.2$ $d 0 \times 0.9 \leq da \leq d 0 \times 1.1 .$
[Math 5] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4) [Math 6] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)

9. The method according to claim 7, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
the optical cavity is installed to the optical device in a state where, with respect to a distance L0 (mm) indicated in the following Formula 1, a distance La (mm) that light travels between the first mirror and the second mirror satisfies $L 0 \times 0.8 \leq La \leq L 0 \times 1.2 .$
[Math 7] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)

10. The method according to claim 7, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be n, a refractive index of a gas filled between the first mirror and the second mirror be n1, a refractive index of a gas that is outside the first mirror and the second mirror be n2, and a distance that light travels between the first mirror and the second mirror be L (mm), the optical cavity is installed to the optical device in a state where, with respect to a thickness d0 (mm) indicated in the following Formula 3, a thickness da (mm) of the first mirror and the second mirror satisfies $d 0 \times 0.9 \leq da \leq d 0 \times 1.1 .$
[Math 8] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)

11. An optical cavity that can be attached to and detached from an optical device, the optical cavity comprising:
a first mirror and a second mirror that can each reflect laser light and are disposed at positions where reflective surfaces face each other, wherein,
in the optical device, a beam diameter and a beam spread angle of the laser light at a position after emission from the optical cavity do not change between a case where the optical cavity is disposed in the optical device and a case where the optical cavity has been removed from the optical device.

12. The optical cavity according to claim 11, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be n, a refractive index of a gas filled between the first mirror and the second mirror be n1, and a refractive index of a gas that is outside the first mirror and the second mirror be n2,
with respect to a distance L0 (mm) and a thickness d0 (mm) indicated in following Formula 4 and Formula 5, a distance La (mm) that light travels between the first mirror and the second mirror and a thickness da (mm) of the first mirror and the second mirror satisfy $L 0 \times 0.8 \leq La \leq L 0 \times 1.2$ $d 0 \times 0.9 \leq da \leq d 0 \times 1.1 .$
[Math 9] $L 0 = R \frac{nn 2 - n {1}^{2}}{{n}^{2} - n {1}^{2}} - d 0 \frac{n - n 2}{n} \pm \sqrt{{\left(R\frac{nn 2 - n {1}^{2}}{{n}^{2} - n {1}^{2}}-d0\frac{n - n 2}{n}\right)}^{2} - 4 d 0 R \frac{n {1}^{2}}{n} \frac{n - n 2}{{n}^{2} - n {1}^{2}}}$ (Formula 4) [Math 10] $d 0 = \frac{L 0 n \left\{2R\left(nn2-n{1}^{2}\right)-L0\left(n2-n{1}^{2}\right)\right\}}{2 \left(n-n2\right) \left\{L0\left({n}^{2}-n{1}^{2}\right)+2Rn{1}^{2}\right\}}$ (Formula 5)

13. The optical cavity according to claim 11, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a thickness of the first mirror and the second mirror be d (mm), a refractive index of the base section be n, a refractive index of a gas filled between the first mirror and the second mirror be n1, and a refractive index of a gas that is outside the first mirror and the second mirror be n2,
with respect to a distance L0 (mm) indicated in the following Formula 1, a distance La (mm) that light travels between the first mirror and the second mirror satisfies $L 0 \times 0.8 \leq La \leq L 0 \times 1.2 .$
[Math 11] $L 0 = R \frac{nn 2 - n {1}^{2}}{{n}^{2} - n {1}^{2}} - d \frac{n - n 2}{n} \pm \sqrt{{\left(R\frac{nn 2 - n {1}^{2}}{{n}^{2} - n {1}^{2}}-d\frac{n - n 2}{n}\right)}^{2} - 4 dR \frac{n {1}^{2}}{n} \frac{n - n 2}{{n}^{2} - n {1}^{2}}}$ (Formula 1)

14. The optical cavity according to claim 11, wherein
the first mirror and the second mirror
have the same shape, each include a base section and a reflective layer, each have a reflective surface that is a concave curved surface,
and are disposed such that the reflective surface of the first mirror and the reflective surface of the second mirror face each other and a normal at a center of the reflective surface of each mirror matches the same straight line, and
letting a radius of curvature of the reflective surface be R (mm), a refractive index of the base section be **n, a** refractive index of a gas filled between the first mirror and the second mirror be n1, a refractive index of a gas that is outside the first mirror and the second mirror be n2, and a distance that light travels between the first mirror and the second mirror be L (mm), with respect to a thickness d0 (mm) indicated in the following Formula 3, a thickness da (mm) of the first mirror and the second mirror satisfies $d 0 \times 0.9 \leq da \leq d 0 \times 1.1 .$
[Math 12] $d 0 = \frac{Ln \left\{2R\left(nn2-n{1}^{2}\right)-L\left(n2-n{1}^{2}\right)\right\}}{2 \left(n-n2\right) \left\{L\left({n}^{2}-n{1}^{2}\right)+2Rn{1}^{2}\right\}}$ (Formula 3)
